# FASCICULE DE BREVET EUROPEEN

(11) **EP 3 210 077 B1**
(45) Date de publication et mention de la délivrance du brevet: **27.11.2019**
(21) Numéro de dépôt: 15786899.3
(22) Date de dépôt: 22.10.2015
(51) Int. Cl.: G03B 11/04, F16K 1/20, E05D 11/10

(54) **DISPOSITIF D'OBTURATION AVEC SYSTÈME DE VERROUILLAGE**
ABDICHTUNGSVORRICHTUNG MIT VERRIEGELUNGSSYSTEM
SHUTTER DEVICE WITH LOCKING SYSTEM

(30) Priorité: 23.10.2014 FR 1402383
(43) Date de publication de la demande: 30.08.2017
(73) Titulaire: Thales, 92400 Courbevoie (FR)
(72) Inventeur: DOMERGUE, Nicolas, F-78995 Elancourt Cedex (FR); CHAMBARD, Laurent, F-78995 Elancourt Cedex (FR)
(74) Mandataire: Lavoix
(86) Numéro de dépôt international: PCT/EP2015/074466
(87) Numéro de publication internationale: WO 2016/062801

(56) Documents cités:
- US-A- 5 797 047
- US-A- 6 033 130
- US-A1- 2003 133 709
- US-B1- 6 799 854

## Description

La présente invention concerne un dispositif d'obturation, du type comprenant un support, un capot d'obturation mobile en rotation par rapport au support autour d'un premier axe, et un dispositif de verrouillage du capot d'obturation dans une position bloquée.

Ce type de dispositif est par exemple, mais non exclusivement, destiné à protéger l'objectif d'un appareil optique tel qu'un appareil photo ou une caméra.

Un dispositif d'obturation de ce type est notamment décrit dans le document FR2986084. Un tel dispositif est cependant complexe et coûteux à réaliser.

D'autres systèmes existants, plus simples, comprennent une charnière et un verrou situés de part et d'autre d'un capot d'obturation. Cependant, de tels systèmes permettent de bloquer le capot d'obturation uniquement dans une position fermée et non dans une position ouverte. Pour bloquer le capot d'obturation dans les deux postions, il est possible d'incorporer le verrou à la charnière, comme dans le document US 2003/133709.

L'invention a pour but de fournir un dispositif d'obturation comprenant un système de verrouillage compact, simple à réaliser et permettant le blocage du capot d'obturation dans une ou plusieurs positions.

A cet effet, l'invention se rapporte à un dispositif d'obturation tel que divulgué dans les revendications.

L'invention sera mieux comprise à la lecture de la description qui va suivre, donnée uniquement à titre d'exemple non limitatif et faite en se référant aux dessins sur lesquels :
- la figure 1 est une vue en perspective d'un dispositif d'obturation selon un mode de réalisation de l'invention ;
- la figure 2 est une vue partielle, en perspective, du dispositif de la figure 1, l'un des éléments étant représenté en coupe ;
- la figure 3 est une vue partielle, en perspective, d'un élément du dispositif des figures 1 et 2 ;
- les figures 4 et 5 sont des vues partielles, en coupe, du dispositif des figures 1 et 2 dans deux configurations différentes.

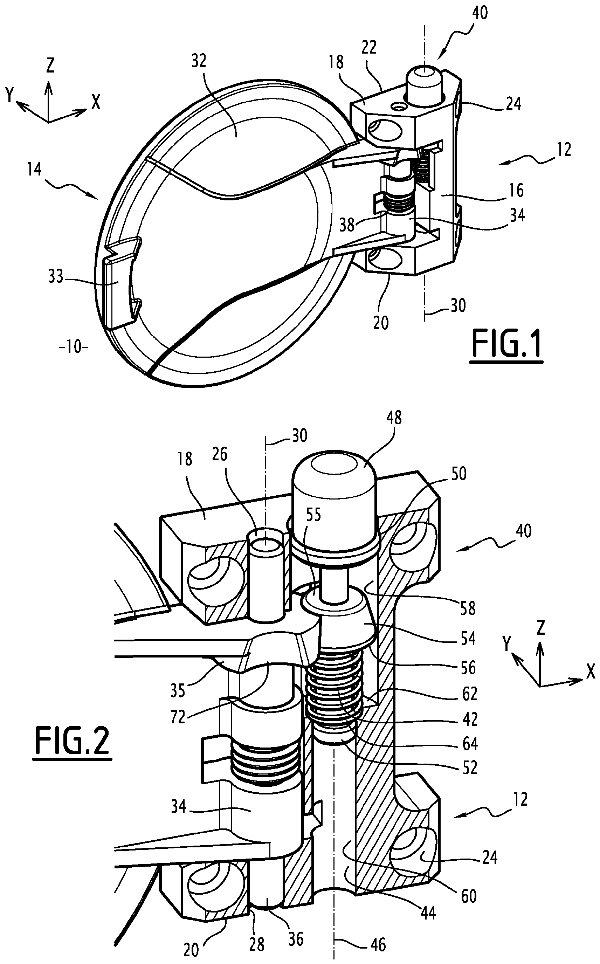

Le dispositif 10 représenté à la figure 1 est par exemple destiné à protéger l'objectif (non représenté) d'un appareil photo ou d'une caméra. Le dispositif 10 comporte un support 12 et un capot d'obturation 14 mobile en rotation par rapport au support 12. La figure 2 montre le dispositif 10 de la figure 1, le support 12 étant représenté en coupe selon un plan (X, Z).

On considère une base orthonormée (X, Y, Z) représentée sur les figures 1 à 5. Le support 12 comporte une partie longitudinale 16, sensiblement disposée selon la direction Z. Chaque extrémité de la partie longitudinale 16 porte respectivement une première et une seconde saillies transversales 18, 20, disposées selon la direction X. Les saillies transversales 18 et 20 sont en vis-à-vis l'une de l'autre.

Le support 12 comporte une surface plane 22, disposée dans un plan (X, Z). La surface 22 est destinée à venir au contact d'une enveloppe extérieure (non représentée) de l'appareil photo ou de la caméra. Le support 12 est fixé à ladite enveloppe extérieure, par exemple au moyen de vis (non représentées) passant par des trous de fixation 24 traversant le support 12 selon la direction Y.

Comme visible sur la figure 2, chaque saillie transversale 18, 20 est percée d'un alésage traversant 26, 28. Les alésages 26 et 28 sont alignés selon un premier axe 30, parallèle à la direction Z.

Le capot d'obturation 14 comporte une plaque d'obturation 32 destinée à protéger l'objectif (non représenté) de l'appareil photo ou de la caméra. La plaque d'obturation 32 a sensiblement la forme d'un disque disposé dans un plan passant par le premier axe 30.

Préférentiellement, comme dans l'exemple de la figure 1, la plaque d'obturation 32 comporte un relief de préhension 33, permettant de manipuler le capot 14 pour le faire pivoter par rapport au support 12.

Du côté diamétralement opposé au relief 33, la plaque d'obturation 32 est solidaire d'un moyeu 34 de forme tubulaire. Le moyeu 34 est disposé selon le premier axe 30 entre les saillies transversales 18 et 20. Une extrémité du moyeu 34, proche de la première saillie transversale 18, forme une bague 35 en saillie radiale par rapport au reste du moyeu 34.

Une barre cylindrique 36 est insérée dans le moyeu 34 et dans les alésages 26 et 28 des saillies transversales 18 et 20. Disposée selon le premier axe 30, la barre 36 matérialise l'axe de rotation du capot 14 par rapport au support 12.

De manière optionnelle, le capot 14 comporte en outre un ressort de torsion 38, enroulé autour de la barre 36. Le ressort 38 tend à ramener la plaque d'obturation 32 dans une position angulaire par rapport au support 12 selon le premier axe 30. Ladite position angulaire correspond par exemple à la position fermée représentée sur la figure 1. En position fermée, la plaque d'obturation 32 est sensiblement disposée selon le plan de la surface plane 22 du support 12. La plaque d'obturation 32 est ainsi apte à recouvrir et protéger l'objectif (non représenté) de l'appareil photo ou de la caméra.

Le dispositif 10 comporte en outre un dispositif 40 de verrouillage du capot d'obturation 14 dans au moins une position par rapport au support 12. Par exemple, sur les figures 1 et 2, le capot 14 est représenté verrouillé en position fermée.

Le dispositif de verrouillage 40 comprend notamment une tige 42, ainsi qu'un trou tubulaire 44 ménagé dans la partie longitudinale 16 du support 12. La tige 42 et le trou tubulaire 44 sont disposés selon un deuxième axe 46 parallèle à la direction Z. La tige 42 est mobile en translation dans le trou tubulaire 44.

Une première extrémité de la tige 42 est formée par un bouton poussoir 48 entouré d'une première collerette 50, de forme annulaire, disposée perpendiculairement au deuxième axe 46. Une seconde extrémité de la tige 42 comporte une seconde collerette 52, de forme annulaire, disposée perpendiculairement au deuxième axe 46 et de rayon inférieur à la première collerette 50.

Entre la première collerette 50 et la seconde collerette 52, la tige 42 comporte une surface tronconique convexe 54, disposée selon le deuxième axe 46. Le tronc de cône s'évase en direction de la seconde collerette 52. L'extrémité la plus étroite du tronc de cône est formée par une première surface plane 55, perpendiculaire au deuxième axe 46 et orientée vers la première collerette 50. L'extrémité la plus large du tronc de cône est formée par une seconde surface plane 56, perpendiculaire au deuxième axe 46 et orientée vers la seconde collerette 52. Un rayon extérieur de la seconde surface plane 56 est supérieur au rayon de la seconde collerette 52 et inférieur ou égal, préférentiellement inférieur, au rayon de la première collerette 50.

Le trou tubulaire 44 comporte une première portion cylindrique 58, de rayon sensiblement égal au rayon de la première collerette 50. La première portion cylindrique 58 est prolongée selon l'axe 46 par une seconde portion cylindrique 60, de rayon sensiblement égal au rayon de la seconde collerette 52.

Les matériaux formant les collerettes 50, 52 et les parois des portions cylindriques 58, 60 ont de préférence un faible coefficient de frottement, de sorte à favoriser un coulissement l'une contre l'autre desdites collerettes et parois.

Une jonction entre la première portion 58 et la seconde portion 60 est formée par un épaulement 62. Entre la seconde surface plane 56 de la tige 42 et l'épaulement 62 du trou tubulaire 44 est disposé un ressort hélicoïdal 64 de compression, enroulé autour de la tige 42.

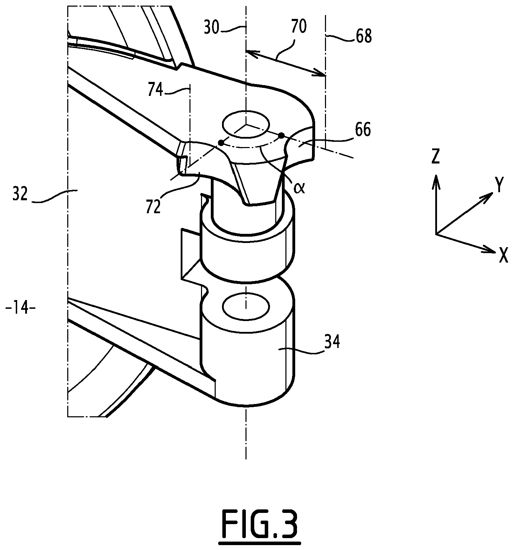

Le dispositif de verrouillage 40 comprend en outre une première surface tronconique concave 66, notamment visible à la figure 3 représentant le capot d'obturation 14. La surface tronconique concave 66 forme une partie d'une surface latérale externe de la bague 35 du moyeu 34. La surface tronconique concave 66 a une forme complémentaire de la surface tronconique convexe 54 de la tige 42.

Le tronc de cône formant la surface 66 est disposé selon un troisième axe 68, parallèle au premier axe 30. Dans un plan (X, Y), il existe une distance 70 non nulle entre le premier axe 30 et le troisième axe 68. A titre d'exemple, la distance 70 est comprise entre 0,5 cm et 5 cm.

De manière optionnelle, le dispositif de verrouillage 40 comprend en outre une deuxième surface tronconique concave 72, également visible à la figure 3 et disposée selon un quatrième axe 74. La deuxième surface tronconique concave 72 forme une partie de la surface latérale externe de la bague 35 et correspond à une image de la première surface tronconique concave 66 par rotation d'un angle α autour du premier axe 30. L'angle α est non nul et est préférentiellement compris entre 60° et 150°. Plus préférentiellement, l'angle α est compris entre 90° et 120°.

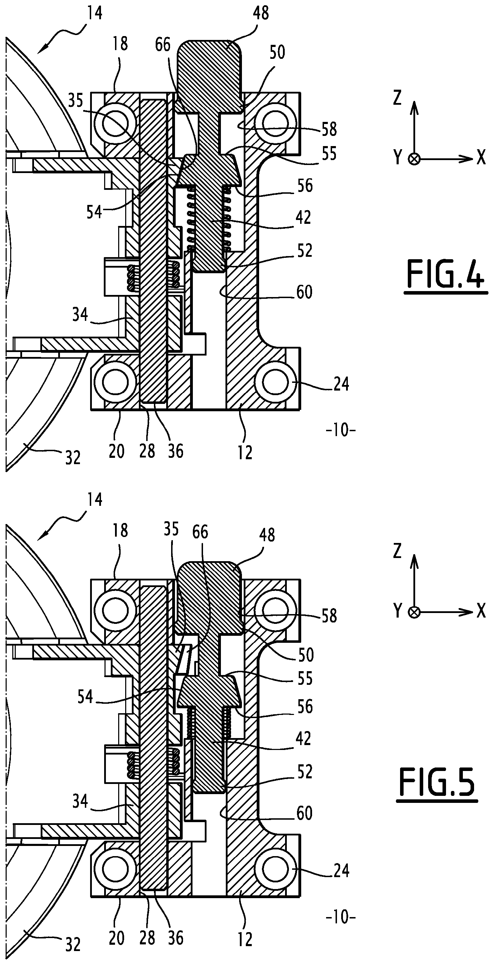

Un procédé de fonctionnement du dispositif 10 va maintenant être décrit. La figure 4 montre une vue en coupe, selon un plan (X, Z), du dispositif 10 verrouillé en position fermée, comme sur les figures 1 et 2. Dans cette position fermée, la surface tronconique convexe 54 de la tige 42 est au contact de la première surface tronconique concave 66 du moyeu 34. Le ressort hélicoïdal 64 est en semi-compression et tend à déplacer la tige 42 dans un sens allant de la deuxième 20 vers la première saillie transversale 18. Les surfaces tronconiques 54 et 66 sont ainsi plaquées l'une contre l'autre, ce qui bloque en rotation le capot 14 par rapport au support 12.

Dans la position fermée, le bouton poussoir 48 est partiellement saillant hors du trou tubulaire 44. La première collerette 50 du bouton poussoir 48 est au contact d'une paroi latérale interne de la première portion cylindrique 58 du trou 44. La seconde collerette 52 de la tige 42 est au contact d'une paroi latérale interne de la seconde portion cylindrique 60 du trou 44.

Afin de donner accès à l'objectif de l'appareil photo ou de la caméra, un opérateur fait passer le capot 14 de la position fermée à une position ouverte. Plus précisément, l'opérateur pousse le bouton poussoir 48 en direction de la deuxième saillie transversale 20 du support 12. La tige 42 coulisse dans le trou 44 selon le deuxième axe 46, guidée par le glissement de la première 50 et de la seconde 52 collerettes, respectivement contre les parois de la première 58 et de la seconde 60 portions cylindriques du trou 44.

Le déplacement de la tige 42 écarte la surface tronconique convexe 54 de la première surface tronconique concave 66. L'opérateur exerce sur le bouton 48 une pression suffisante pour que la surface tronconique convexe 54 soit entièrement décalée par rapport à la bague 35 selon la direction Z, comme représenté sur la figure 5. Par exemple, l'opérateur comprime au maximum le ressort 64, de manière à ce que les spires dudit ressort soient au contact les unes des autres. L'opérateur saisit ensuite le relief de préhension 33 pour faire pivoter la plaque d'obturation 32, de manière à ouvrir le capot 14.

Lorsque l'opérateur relâche sa pression sur le bouton 48, le ressort 64 se détend et la première surface plane 55 de la tige 42 vient se plaquer contre une surface frontale de la bague 35, disposée selon un plan (X, Y). Ce contact n'empêche toutefois pas le pivotement du capot 14 autour du premier axe 30.

Actionnée par l'opérateur au moyen du relief 33, la plaque d'obturation 32 poursuit son pivotement jusqu'à ce que la deuxième surface tronconique concave 72 se retrouve en position coaxiale avec la surface tronconique convexe 54. Sous l'action du ressort 64 qui se détend, la tige 42 coulisse selon le deuxième axe 46 de manière à plaquer l'une contre l'autre les surfaces tronconiques 54 et 72. Le capot 14 est alors bloqué en rotation par rapport au support 12, dans une position ouverte qui donne accès à l'objectif de l'appareil photo ou de la caméra.

Pour refermer le capot 14, l'opérateur exerce à nouveau une pression sur le bouton 48, de manière à décaler entièrement la surface tronconique 54 par rapport à la bague 35 selon la direction Z, comme sur la figure 5. Le capot 14 est ainsi libéré en rotation par rapport au support 12 et le ressort de torsion 38 ramène la plaque 32 en position fermée. Selon une variante, le dispositif 10 ne comprend pas de ressort de torsion et l'opérateur déplace manuellement la plaque 32 en position fermée. Sous l'action du ressort 64 qui se détend, la tige 42 revient alors dans la position de blocage de la figure 4.

Entre la position fermée et la position ouverte, la plaque d'obturation 32 parcourt une portion angulaire autour du premier axe 30. L'angle de cette portion angulaire est égal à l'angle α formé par le premier axe 30 et les axes 68, 74 des première 66 et deuxième 72 surfaces tronconiques concaves. Il est à noter que les éléments formant le dispositif de verrouillage 40, en particulier la tige 42 et son axe 46, ne sont pas compris dans ladite portion angulaire parcourue par la plaque d'obturation 32. En d'autres termes, par rapport à la plaque d'obturation 32, la tige 42 est située du côté du moyeu 34 et non du côté du relief de préhension 33. Le dispositif de verrouillage 40 est donc compris dans un espace beaucoup plus restreint que les dispositifs connus, comprenant une charnière et un verrou situés de part et d'autre de la plaque d'obturation.

Selon une variante de réalisation, la bague 35 ne comporte qu'une seule surface tronconique concave et le dispositif de verrouillage 40 ne permet de bloquer le capot 14 que dans une seule position angulaire par rapport au support 12, correspondant par exemple à la position fermée. Selon une autre variante de réalisation, la bague 35 comporte plus de deux surfaces tronconiques concaves, ce qui permet de bloquer le capot 14 dans au moins trois positions angulaires différentes.

Selon une variante de réalisation, le ressort de torsion 38 tend à déplacer la plaque 32 en position ouverte et non en position fermée.

Un procédé de montage du dispositif 10 des figures 1 à 5 va maintenant être décrit. Le ressort hélicoïdal 64 est enfilé sur la tige 42, en butée sur la seconde surface plane 56. La tige 42 est ensuite enfoncée dans le trou tubulaire 44 du support 12, la seconde collerette 52 étant orientée de manière proximale. L'enfoncement se poursuit jusqu'à ce que les première et seconde collerettes 50, 52 soient insérées respectivement dans les première et seconde portions cylindriques 58, 60 du trou 44. Le ressort hélicoïdal 64 est maintenu axialement entre la seconde surface plane 56 de la tige 42 et l'épaulement 62 du trou tubulaire 44.

Une pression est alors exercée sur le bouton poussoir 48 de manière à comprimer complètement le ressort 64, comme sur la figure 5. Tandis que ladite pression est maintenue, le moyeu 34 du capot 14 est disposé entre les première et deuxième saillies transversales 18, 20 du support 12, coaxialement au premier axe 30. De manière optionnelle, le ressort de torsion 38 est également disposé coaxialement au premier axe 30, dans la configuration souhaitée pour la fonction de rappel précédemment décrite.

A ce stade, la pression sur le bouton poussoir 48 est préférentiellement relâchée, le ressort 64 étant maintenu en semi-compression par la présence de la bague 35 du moyeu 34.

Enfin, le barreau cylindrique 36 est inséré selon le premier axe 30, successivement dans un alésage 26 ou 28 d'une saillie transversale, dans le moyeu tubulaire 34 et dans l'autre alésage 28 ou 26 d'une saillie transversale. Les dimensions respectives et les propriétés de surface des alésages 26, 28 et du barreau 36 sont déterminées de sorte à maintenir axialement en place le barreau 36 après l'insertion dans les alésages 26, 28, tout en permettant une rotation dudit barreau selon l'axe 30 dans lesdits alésages.

Le montage du dispositif 10 est donc extrêmement simple puisque l'insertion du barreau 36 permet de maintenir en place tous les éléments du dispositif.

Le dispositif 10 est alors fixé à l'enveloppe extérieure d'un appareil au moyen des trous de fixation 24, comme décrit ci-dessus. Selon une variante, le procédé de montage du dispositif 10 décrit ci-dessus est réalisé avec le support 12 déjà fixé à ladite enveloppe extérieure.

Le mode de réalisation de l'invention décrit ci-dessus concerne l'obturation de l'objectif d'un appareil optique tel qu'un appareil photo ou une caméra. Cependant, la présente invention ne se limite pas à une telle utilisation et s'applique par exemple à l'obturation d'une trappe de connecteur électrique ou électronique, ou encore à la protection d'un hublot, d'un afficheur ou d'un écran. D'une manière générale, la présente invention concerne toutes les applications comprenant un cache ou une protection solidaire d'un bâti, et nécessitant un blocage en position fermée et/ou ouverte et/ ou en une position intermédiaire définie.

## Revendications

1. Dispositif d'obturation (10) comprenant :
- un support (12) ;
- un capot d'obturation (14) comportant: un moyeu (34) mobile en rotation par rapport au support autour d'un premier axe (30) ; et une plaque d'obturation (32) solidaire du moyeu ;
- un dispositif (40) de verrouillage du capot d'obturation dans une position bloquée ;
**caractérisé en ce que** le dispositif de verrouillage comprend :
- une tige (42) disposée selon un deuxième axe (46) parallèle au premier axe, ladite tige étant mobile en translation par rapport au support selon le deuxième axe, ladite tige comportant une surface tronconique convexe (54) disposée selon ledit deuxième axe (46) et formant une butée ;
- une première contre-butée (66) formée par une surface tronconique concave du moyeu (34) du capot d'obturation, ladite surface tronconique concave et la surface tronconique convexe (54) étant de formes complémentaires ;
- un ressort de compression (64) disposé selon le deuxième axe, ledit ressort tendant à maintenir la butée au contact de la première contre-butée,
ladite butée et ladite première contre-butée étant configurées de sorte que ledit contact bloque en rotation le capot d'obturation de manière à maintenir ledit capot dans la position bloquée ;
une compression du ressort tendant à libérer la butée du contact de la première contre-butée, ladite libération autorisant la rotation du capot d'obturation.

2. Dispositif d'obturation selon la revendication 1, dans lequel la plaque d'obturation est sensiblement plane et mobile en rotation dans une portion angulaire autour du premier axe, le deuxième axe (46) étant situé à l'extérieur de ladite portion angulaire.

3. Dispositif d'obturation selon la revendication 2, dans lequel la surface tronconique concave (66) du moyeu (34) est disposée de manière excentrée (70) par rapport au premier axe (30).

4. Dispositif d'obturation selon l'une des revendications précédentes, dans lequel une extrémité de la tige (42) porte un bouton poussoir (48), la tige et le ressort de compression (64) étant configurés de sorte qu'une pression sur ledit bouton poussoir entraîne une compression du ressort pour libérer la butée (54) du contact avec la première contre-butée (66).

5. Dispositif d'obturation selon l'une des revendications précédentes, dans lequel :
- le capot d'obturation (14) est mobile en rotation par rapport au support (12) entre une position ouverte et une position fermée ;
- le capot d'obturation comporte une deuxième contre-butée (72), la première contre-butée (66) et ladite deuxième contre-butée étant disposées angulairement (α) par rapport au premier axe (30),
la butée et lesdites première et deuxièmes contre-butées étant configurées de sorte que :
- un contact entre la butée et la première contre-butée bloque le capot d'obturation dans l'une des positions ouverte ou fermée,
- un contact entre la butée et la deuxième contre-butée bloque le capot d'obturation dans l'autre des positions ouverte ou fermée.

6. Dispositif d'obturation selon la revendication 5, dans lequel la deuxième contre-butée (72) est formée par une surface tronconique concave du moyeu (34) du capot d'obturation.

7. Dispositif d'obturation selon la revendication 6, dans lequel le moyeu (34) comporte au moins trois surfaces tronconiques concaves, chacune desdites surfaces formant contre-butée, le dispositif de verrouillage (40) étant ainsi apte à bloquer le capot d'obturation (14) dans au moins trois positions angulaires différentes par rapport au support (12).

8. Dispositif d'obturation selon l'une des revendications précédentes, comprenant un ressort de rappel (38) tendant à ramener le capot d'obturation (14) dans une position angulaire selon le premier axe par rapport au support (12).

9. Procédé de mise en oeuvre d'un dispositif d'obturation (10) selon l'une des revendications précédentes, comprenant les étapes suivantes :
- compression du ressort (64) de sorte à libérer la butée (54) du contact de la première contre-butée (66) ; puis
- mise en rotation du capot d'obturation (14) par rapport au support (12) autour du premier axe (30) ; puis
- relâchement du ressort.

10. Procédé de mise en œuvre selon la revendication 9, d'un dispositif d'obturation selon l'une des revendications 5 à 8, dans lequel le relâchement du ressort met en contact la butée (54) avec la deuxième contre-butée (72).

11. Procédé de fabrication d'un dispositif d'obturation (10) selon l'une des revendications 2 à 8, comprenant les étapes suivantes :
- assemblage de la tige (42) comportant une surface tronconique convexe (54) et du ressort de compression (64) avec le support (12), selon le deuxième axe (46) ; puis
- compression maximale du ressort et assemblage du moyeu (34) comportant une surface tronconique concave du capot d'obturation (14) avec le support, selon le premier axe (30) ; puis
- insertion d'un barreau cylindrique (36) dans le support (12) et le moyeu (34), de sorte à matérialiser le premier axe (30) de rotation du capot, et relâchement du ressort (64).

## Patentansprüche

1. Verschlussvorrichtung (10), aufweisend:
- einen Halter (12),
- einen Verschlussdeckel (14), der aufweist: eine Nabe (34), die bezüglich des Halters um eine erste Achse (30) drehbewegbar ist, und eine Verschlussplatte (32), die mit der Nabe fest verbunden ist,
- eine Vorrichtung (40) zum Verriegeln des Verschlussdeckels in einer Blockiert-Position,
**dadurch gekennzeichnet, dass** die Vorrichtung zum Verriegeln aufweist:
- eine Stange (42), die entlang einer zweiten Achse (46) angeordnet ist, die parallel zur ersten Achse ist, wobei die Stange bezüglich des Halters entlang der zweiten Achse translationsbewegbar ist, wobei die Stange eine kegelstumpfförmige, konvexe Fläche (54) aufweist, die entlang der zweiten Achse (46) angeordnet ist und einen Anschlag bildet,
- einen ersten Gegen-Anschlag (66), der von einer kegelstumpfförmigen, konkaven Fläche der Nabe (34) des Verschlussdeckels gebildet ist, wobei die kegelstumpfförmige, konkave Fläche und die kegelstumpfförmige, konvexe Fläche (54) von komplementärer Gestalt sind,
- eine Druck-Feder (64), die entlang der zweiten Achse angeordnet ist, wobei die Feder spannwirkt, um den Anschlag in Kontakt mit dem ersten Gegen-Anschlag zu halten,
wobei der Anschlag und der erste Gegen-Anschlag derart konfiguriert sind, dass der Kontakt den Verschlussdeckel drehblockiert, um den Deckel in der Blockiert-Position zu halten,
wobei eine Komprimierung der Feder wirkt, um den Anschlag von dem Kontakt mit dem ersten Gegen-Anschlag freizugeben, wobei diese Freigabe die Drehung des Verschlussdeckels ermöglicht.

2. Verschlussvorrichtung gemäß Anspruch 1, wobei die Verschlussplatte im Wesentlichen eben ist und in einem Winkelbereich um die erste Achse drehbar ist, wobei die zweite Achse (46) auswärts des besagten Winkelbereichs angeordnet ist.

3. Verschlussvorrichtung gemäß Anspruch 2, wobei die kegelstumpfförmige, konkave Fläche (66) der Nabe (34) bezüglich der ersten Achse (30) exzentrisch (70) angeordnet ist.

4. Verschlussvorrichtung gemäß einem der vorhergehenden Ansprüche, wobei ein Ende der Stange (42) einen Drückknopf (48) trägt, wobei die Stange und die Druck-Feder (64) derart konfiguriert sind, dass ein Druck auf den Drückkopf eine Komprimierung der Feder bewirkt zum Freigeben des Anschlags (54) von dem Kontakt mit dem ersten Gegen-Anschlag (66).

5. Verschlussvorrichtung gemäß einem der vorhergehenden Ansprüche, wobei:
- der Verschlussdeckel (14) bezüglich des Halters (12) zwischen einer Geöffnet-Position und einer Geschlossen-Position drehbewegbar ist,
- wobei der Verschlussdeckel einen zweiten Gegen-Anschlag (72) aufweist, wobei der erste Gegen-Anschlag (66) und der zweite Gegen-Anschlag bezüglich der ersten Achse (30) winkelversetzt angeordnet sind,
wobei der Anschlag und der erste und der zweite Gegen-Anschlag derart konfiguriert sind, dass
- ein Kontakt zwischen dem Anschlag und dem Gegen-Anschlag den Verschlussdeckel in einer von der Geöffnet-Position oder der Geschlossen-Position blockiert,
- ein Kontakt zwischen dem Anschlag und dem zweiten Gegen-Anschlag den Verschlussdeckel in der anderen von der Geöffnet- oder der Geschlossen-Position blockiert.

6. Verschlussvorrichtung gemäß Anspruch 5, wobei der zweite Gegen-Anschlag (72) gebildet ist von einer kegelstumpfförmigen, konkaven Fläche der Nabe (34) des Verschlussdeckels.

7. Verschlussvorrichtung gemäß Anspruch 6, wobei die Nabe (34) aufweist wenigstens drei kegelstumpfförmige, konkave Flächen, wobei jede der Flächen einen Gegen-Anschlag bildet, wobei die Vorrichtung zum Verriegeln (40) daher imstande ist, den Verschlussdeckel (14) zu blockieren in wenigstens drei unterschiedlichen Winkelpositionen bezüglich des Halters (12).

8. Verschlussvorrichtung gemäß einem der vorhergehenden Ansprüche, aufweisend eine Rückstellfeder (38), die spannwirkt, um den Verschlussdeckel (14) rückzustellen in eine Winkelposition um die erste Achse bezüglich des Halters (12).

9. Verfahren zum Anwenden einer Verschlussvorrichtung (10) gemäß einem der vorhergehenden Ansprüche, aufweisend die folgenden Schritte:
- Komprimieren der Feder (64), um den Anschlag (54) von seinem Kontakt mit dem ersten Gegen-Anschlag (66) freizugeben, dann
- Drehen des Verschlussdeckels (14) bezüglich des Halters (12) um die erste Achse (30), dann
- Loslassen der Feder.

10. Verfahren zum Anwenden gemäß Anspruch 9 einer Verschlussvorrichtung gemäß einem der Ansprüche 5 bis 8, wobei das Loslassen der Feder den Anschlag (54) mit dem zweiten Gegen-Anschlag (72) in Kontakt bringt.

11. Verfahren zum Herstellen einer Verschlussvorrichtung (10) gemäß einem der Ansprüche 2 bis 8, aufweisend die folgenden Schritte:
- Zusammenbauen der Stange (42), die eine kegelstumpfförmige, konvexe Fläche (54) aufweist, und der Druck-Feder (64) mit dem Halter (12) entlang der zweiten Achse (46), dann
- maximales Komprimieren der Feder und Zusammenbauen der Nabe (34) des Verschlussdeckels (14), die eine kegelstumpfförmige, konkave Fläche aufweist, mit dem Halter entlang der Achse (30), dann
- Einsetzen einer zylindrischen Stange (36) in den Halter (12) und die Nabe (34), um die erste Dreh-Achse (30) des Deckels zu verwirklichen, und Loslassen der Feder (64).

## Claims

1. Shutter device (10), comprising:
- a support (12);
- a shutter cover (14) comprising: a hub (34) which is rotatable relative to the support about a first axis (30); and a shutter plate (32) secured to the hub;
- a device (40) for locking the shutter cover in a blocked position;
**characterised in that** the locking device comprises:
- a rod (42) arranged along a second axis (46) parallel to the first axis, said rod being movable in translation relative to the support along the second axis, said rod comprising a convex frustoconical surface (54) arranged along said second axis (46) and forming a stop;
- a first counter-stop (66) formed by a concave frustoconical surface of the hub (34) of the shutter cover, said concave frustoconical surface and the convex frustoconical surface (54) being of complementary shapes;
- a compression spring (64) arranged along the second axis, said spring tending to hold the stop in contact with the first counter-stop,
said stop and said first counter-stop being configured so that said contact blocks rotation of the shutter cover so as to hold said cover in the blocked position; compression of the spring tending to release the stop from contact with the first counter-stop, said release allowing the shutter cover to rotate.

2. Shutter device according to claim 1, wherein the shutter plate is substantially planar and rotatable in an angular portion about the first axis, the second axis (46) being situated outside said angular portion.

3. Shutter device according to claim 2, wherein the concave frustoconical surface (66) of the hub (34) is arranged eccentrically (70) relative to the first axis (30).

4. Shutter device according to any one of the preceding claims, wherein one end of the rod (42) carries a pushbutton (48), the rod and the compression spring (64) being configured so that pressure on said pushbutton causes compression of the spring in order to release the stop (54) from contact with the first counter-stop (66).

5. Shutter device according to any one of the preceding claims, wherein:
- the shutter cover (14) is rotatable relative to the support (12) between an open position and a closed position;
- the shutter cover comprises a second counter-stop (72), the first counter-stop (66) and said second counter-stop being arranged angularly (α) relative to the first axis (30),
the stop and said first and second counter-stops being so configured that:
- contact between the stop and the first counter-stop blocks the shutter cover in one of the open or closed positions;
- contact between the stop and the second counter-stop blocks the shutter cover in the other of the open or closed positions.

6. Shutter device according to claim 5, wherein the second counter-stop (72) is formed by a concave frustoconical surface of the hub (34) of the shutter cover.

7. Shutter device according to claim 6, wherein the hub (34) comprises at least three concave frustoconical surfaces, each of said surfaces forming a counter-stop, the locking device (40) thus being adapted to block the shutter cover (14) in at least three different angular positions relative to the support (12).

8. Shutter device according to any one of the preceding claims, comprising a return spring (38) which tends to return the shutter cover (14) to an angular position along the first axis relative to the support (12).

9. Method for using a shutter device (10) according to any one of the preceding claims, comprising the following steps:
- compressing the spring (64) so as to release the stop (54) from contact with the first counter-stop (66); then
- rotating the shutter cover (14) relative to the support (12) about the first axis (30); then
- releasing the spring.

10. Method according to claim 9 for using a shutter device according to any one of claims 5 to 8, wherein releasing the spring brings the stop (54) into contact with the second counter-stop (72).

11. Method for manufacturing a shutter device (10) according to any one of claims 2 to 8, comprising the following steps:
- assembling the rod (42), having a convex frustoconical surface (54), and the compression spring (64) with the support (12) along the second axis (46); then
- compressing the spring to the maximum and assembling the hub (34), having a concave frustoconical surface, of the shutter cover (14) with the support along the first axis (30); then
- inserting a cylindrical bar (36) into the support (12) and the hub (34) so as to produce the first axis (30) of rotation of the cover, and releasing the spring (64).
